# EUROPEAN PATENT APPLICATION

(11) **EP 0 981 224 A1**
(43) Date of publication of application: **23.02.2000**
(21) Application number: 99938025.6
(22) Date of filing: 05.03.1999
(51) Int. Cl.: H04L 12/28, H04B 7/26

(54) **METHOD AND APPARATUS FOR TRAFFIC CONTROL**

(30) Priority: 06.03.1998 JP 5508898
(71) Applicant: NTT MOBILE COMMUNICATIONS NETWORK INC., Minato-ku, Tokyo 105-8436 (JP)
(72) Inventor: KAWAKAMI, Hiroshi, Yokosuka-shi, Kanagawa 239-0841 (JP); TAMURA, Motoshi, Yokosuka-shi, Kanagawa 239-0841 (JP); ISHINO, Fumiaki, Tokyo 177-0053 (JP); AKIYAMA, Daisuke, Urban-Palace 210, Yokosuka-shi, Kanagawa 238-0051 (JP); NAKANO, Masatomo, Aoba-ku, Yokahama-shi, Kanagawa 227-0064 (JP)
(74) Representative: Beresford, Keith Denis Lewis
(86) International application number: JP9901092
(87) International publication number: WO9945675

(57) **Abstract**

A traffic control unit and a traffic control method are provided. They carry out, in a first shared resource (like a radio base station in a mobile radio network) of a network including besides the first shared resource, a second shared resource (like a transmission path between a radio base station and a local switch) and a local switch, which are shared by a plurality of users, traffic control of data to be transmitted to the local switch through the second shared resource. This makes it possible to positively achieve the traffic control, and to prevent the shared resources in the network from being wasted. Appropriate control is implemented by carrying out, for data taking place in a burst mode at a period proper to the data, traffic control such that a cumulative transmission volume in a traffic monitoring period determined by taking account of the proper period does not exceed an allowed transmission volume based on a traffic rate.

## Description

### TECHNICAL FIELD

The present invention relates to a traffic control unit and a traffic control method in data transmission such as cell transmission in asynchronous transfer mode (ATM) network. More particularly, it relates to a traffic control unit and a traffic control method capable of preventing shared resources in a network from being wasted by positively carrying out the traffic control in the right place in the network. In addition, it relates to a traffic control unit and a traffic control method capable of achieving, for data that take place in a burst mode at a period proper to the data, appropriate control by selecting a traffic monitoring period with taking account of the proper period.

### BACKGROUND ART

It is said that a major object of the traffic control in a BISDN (Broadband Integrated Services Digital Network) is to protect networks and users for achieving predetermined performance targets of the network, such as cell delay variations (refer to ITU-T Recommendation I.371, "Traffic control and congestion control in B-ISDN"). The traffic control basically refers to a series of processings carried out by the network for avoiding congestion, and has functions for optimizing the usage of the resources in the network (network resources) to optimize the efficiency of the network. To implement such functions, a connection admission control (CAC) function and a usage parameter control (UPC) function are defined as functions for managing and controlling the traffic of an ATM network.

The connection admission control (CAC) is defined as a series of processings carried out by the network in the call setup stage. An ATM transmission system provides quality assurance of the communication connection, and to achieve this, traffic condition of the communication connection is exchanged between the user and the network at the communication initialization. In this case, it is necessary for the user and network to conduct negotiations and establish an accord on the information (such as declared parameter like traffic parameter) that is contained in a traffic contract specification. On the basis of the declared parameter and taking account of the used state of the network resources, the network side decides on whether it accepts the user communication or not. This processing is called connection admission control (CAC).

The usage parameter control (UPC) is carried out in a user network interface (UNI), and refers to a series of processings the network carries out for monitoring and controlling the traffic on the ATM connection from the view point of the traffic volume of cells or the like. When the network allows the user to start communication, the communication enters a traffic state. In the traffic state, the network carries out traffic monitoring (policing) of user cells in accordance with the declared parameter. The usage parameter control (UPC) function is provided as a concrete method for implementing the policing. The UPC function carries out the following functions when the number of input cells exceeds the value defined by the declared parameter: 1.smoothing; 2.cell discard; and 3.violation display and the like. On the other hand, to meet the declared traffic condition (traffic parameter), the user terminal side carries out traffic shaping (TS) control that transmits burst traffic exceeding the declared value by averaging it.

The declared parameter includes peak cell rate (PCR), sustainable cell rate (SCR), maximum burst size (MBS) and the like, which are standardized in the ATM forum or ITU ―T, and known worldwide (see, ITU-T Recommendation I.371, "Traffic control and congestion control in B-ISDN"). When controlled data are not limited to cells, the term "traffic" is used in place of "cell" such as a peak traffic rate (PTR) and sustainable traffic rate ( STR).

The UPC function of the foregoing network, which is assigned in a conventional fixed network to an input port of subscriber's lines in a local switch, discards illegal traffic taking place when a user transmits over the declared traffic.

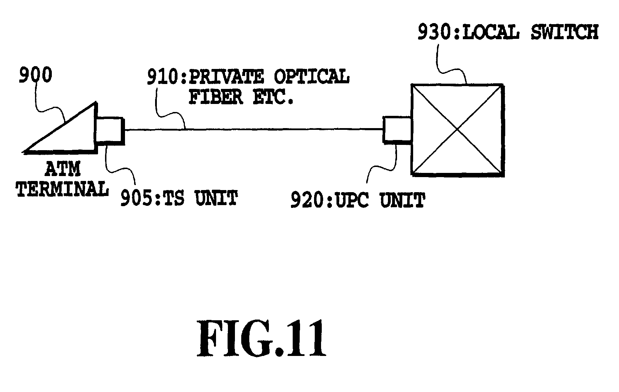

Fig. 11 is a diagram showing a configuration in which a UPC unit and a TS unit are installed in a conventional fixed network. As shown in Fig. 11, a user terminal side from an ATM terminal 900 up to a local (ATM) switch 930 includes a private optical fiber and the like 910 installed for respective subscribers (users). Even if traffic beyond the declared parameter takes place, it does not present any problem to other users when a UPC unit 920 is installed before an input port of the local ATM switch 930 whose resources are shared with other users to carry out the traffic control (UPC control). In contrast with this, a TS unit 905 is installed on the user terminal side so that burst mode traffic beyond the declared value is transmitted after averaging it to meet the declared traffic condition.

However, the mobile communications, whose configuration differs from that of the conventional fixed network as shown in Fig. 11, shares resources such as radio resources and base station transmission paths with other users in the section from the user terminals to the local switch. Therefore, when carrying out the traffic control such as discarding the illegal traffic in the local switch as in the foregoing fixed network, the shared resources such as the radio resources and base station transmission paths associated with the discarded traffic are wasted. This presents a problem of being inefficient. The same problem arises when applying shared resources such as multiplex transmission paths (for example, a network comprising a LAN (Local Area Network) and PBX (Private Branch Exchange)) to subscriber access transmission paths. On the other hand, when carrying out the traffic control in unshared resources in the network such as user terminals, for example, there is apprehension that the traffic control can become lax because of user's modifications regardless of whether malicious or not. Accordingly, it is preferable that the traffic control be carried out in the shared resources in the network out of users' reach, before the shared resources are used for the data transmission.

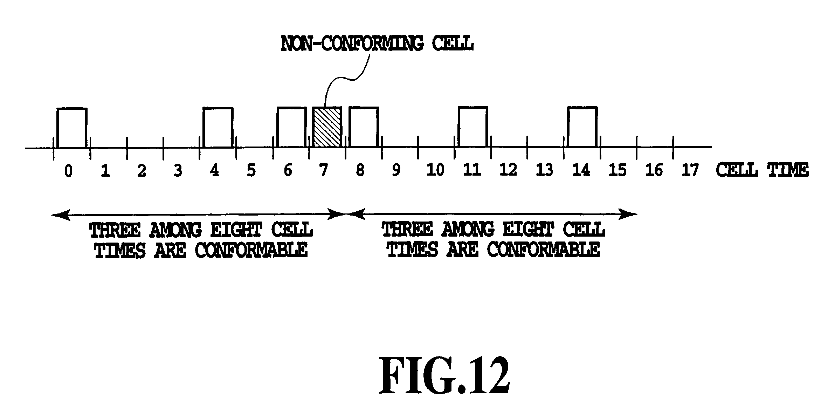

Fig. 12 is a diagram illustrating an example of the conventional traffic control. The control as shown in Fig. 12 carries out a processing for deciding the exceeding cells as non-conforming cells, when the cumulative data transmission volume in a cell monitoring period (8 [cell times]) exceeds an allowed transmission volume (3 [cells]) based on the cell rate (3/8 [cell/cell time]). In the example of Fig. 12, the seventh cell is decided as a non-conforming cell. The cell which is decided as a non-conforming cell is discarded, for example. As the cell rate, a PCR or SCR is available.

However, the conventional traffic control has a problem of being unable to achieve appropriate control for such data as taking place in a burst mode at a period proper to the data because the conventional traffic control does not select a traffic monitoring period with considering the proper period. For example, consider a case in a mobile radio network, in which a radio base station assembles ATM cells from radio frames sent from mobile stations, and carries out the traffic control of the generated ATM cells (data). When generating the ATM cells from the radio frames, particularly when generating a plurality of ATM cells from one radio frame, the ATM cells are generated in a burst mode at every radio frame period. In this case, burst traffic takes place at every radio frame period, and a lot of data are discarded as data that cannot meet the traffic condition when the traffic monitoring period is selected unsuitably (for example, when it is much smaller than the radio frame period). This is because the PCR at the radio base station becomes much larger than the PCR at the input to the mobile station side, because the PCR (PTR) decided by the traffic control unit is the reciprocal of the cell interval. Thus, it is preferable that the traffic control be carried out by selecting an appropriate traffic monitoring period with considering the period proper to the data to be subjected to the control (for example, the radio frame period).

### DISCLOSURE OF THE INVENTION

The present invention is implemented to solve the foregoing problems. Therefore, an object of the present invention is to prevent the waste of the shared resources in the network by positively carrying out the traffic control in an appropriate place in the network.

Another object of the present invention is to provide appropriate control for data occurring in a burst mode at the period proper to the data by selecting traffic monitoring period with considering the proper period of the data.

In order to accomplish the objects aforementioned, according to the invention as claimed in claim 1, a traffic control unit for carrying out traffic control of data in a first shared resource of a network including besides the first shared resource, a second shared resource and a local switch, which are shared by a plurality of users, comprises:
receiving means for receiving the data;
traffic control means for carrying out traffic control of data to be transmitted to the local switch through the second shared resource from among the data received by the receiving means; and
transmission means for transmitting the data passing through the traffic control by the traffic control means.

According to the invention as claimed in claim 2, in the traffic control unit as claimed in claim 1, the network comprises:
a radio base station; and
a transmission path between the radio base station and local switch for transmitting data between the radio base station and the local switch, and wherein the first shared resource consists of the radio base station, and the second shared resource includes the transmission path between the radio base station and local switch.

According to the invention as claimed in claim 3, in the traffic control unit as claimed in claim 1 or 2, the data takes place in a burst mode at a period proper to the data, and wherein the traffic control unit carries out, for the data received by the receiving means, traffic control such that a cumulative transmission volume in a traffic monitoring period defined by taking account of the proper period does not exceed a volume based on a traffic rate.

According to the invention as claimed in claim 4, a traffic control unit for carrying out traffic control of data taking place in a burst mode at a period proper to the data, comprises:
receiving means for receiving data;
traffic control means for carrying out traffic control for the data received by the receiving means such that a cumulative transmission volume in a traffic monitoring period defined by taking account of the proper period does not exceed an allowed transmission volume based on a traffic rate; and
transmission means for transmitting data controlled by the traffic control means.

According to the invention as claimed in claim 5, in the traffic control unit as claimed in claim 4, the traffic control means carries out, for the data received by the receiving means, peak traffic control such that a cumulative transmission volume in a peak traffic monitoring period defined by taking account of the proper period does not exceed an allowed transmission volume based on a peak traffic rate, and sustainable traffic control such that a cumulative transmission volume in a sustainable traffic monitoring period defined by taking account of the proper period does not exceed an allowed transmission volume based on a sustainable traffic rate.

According to the invention as claimed in claim 6, in the traffic control unit as claimed in claim 5, the sustainable traffic control is carried out by sliding the sustainable traffic monitoring period at every peak traffic monitoring period.

According to the invention as claimed in claim 7, in the traffic control unit as claimed in claim 5 or 6, the peak traffic control period is equal to the proper period, and the sustainable traffic control period is equal to n times the proper period, where n is a natural number.

According to the invention as claimed in claim 8, in the traffic control unit as claimed in any one of claims 4-7, the data consists of ATM cells generated from a radio frame, and the proper period equals a radio frame period.

According to the invention as claimed in claim 9, a traffic control method for carrying out traffic control of data in a first shared resource of a network including besides the first shared resource, a second shared resource and a local switch, which are shared by a plurality of users, comprises the steps of:
receiving data;
carrying out traffic control of data to be transmitted to the local switch through the second shared resource from among the data received; and
transmitting the data passing through the traffic control.

According to the invention as claimed in claim 10, a traffic control method for carrying out traffic control of data taking place in a burst mode at a period proper to the data, comprises the steps of:
receiving data;
carrying out traffic control of the data received such that a cumulative transmission volume in a traffic monitoring period defined by taking account of the proper period does not exceed an allowed transmission volume based on a traffic rate; and
transmitting data passing through the traffic control.

### BRIEF DESCRIPTION OF THE DRAWINGS

Fig. 1 is a block diagram showing a configuration of a traffic control unit of a first embodiment in accordance with the present invention;
Fig. 2 is a block diagram showing a configuration in which the traffic control unit of the first embodiment in accordance with the present invention is installed in a network including a LAN and PBX;
Fig. 3 is a block diagram showing a configuration in which the traffic control unit of the first embodiment in accordance with the present invention is installed in a mobile radio network comprising mobile stations and a radio base station;
Fig. 4 is a block diagram showing a configuration in which the traffic control unit of the first embodiment in accordance with the present invention is installed in a network comprising another network and a gateway switch;
Fig. 5 is a block diagram showing a configuration of the traffic control unit of a second embodiment in accordance with the present invention;
Fig. 6 is a block diagram showing a mobile radio network in which the traffic control unit of the second embodiment in accordance with the present invention is installed;
Fig. 7 is a flowchart illustrating a control processing by the traffic control unit of the second embodiment in accordance with the present invention;
Fig. 8 is a diagram illustrating an example to which the traffic control processing of Fig. 7 is applied to cells transmitted;
Fig. 9 is a flowchart illustrating another control processing by the traffic control unit of the second embodiment in accordance with the present invention;
Fig. 10 is a diagram illustrating an example to which the traffic control processing of Fig. 9 is applied to cells transmitted;
Fig. 11 is a diagram showing a configuration in which a UPC unit and a TS unit are installed in a conventional fixed network; and
Fig. 12 is a diagram illustrating an example of conventional traffic control.

### BEST MODE FOR CARRYING OUT THE INVENTION

The embodiments in accordance with the present invention will now be described with reference to the accompanying drawings.

### [FIRST EMBODIMENT]

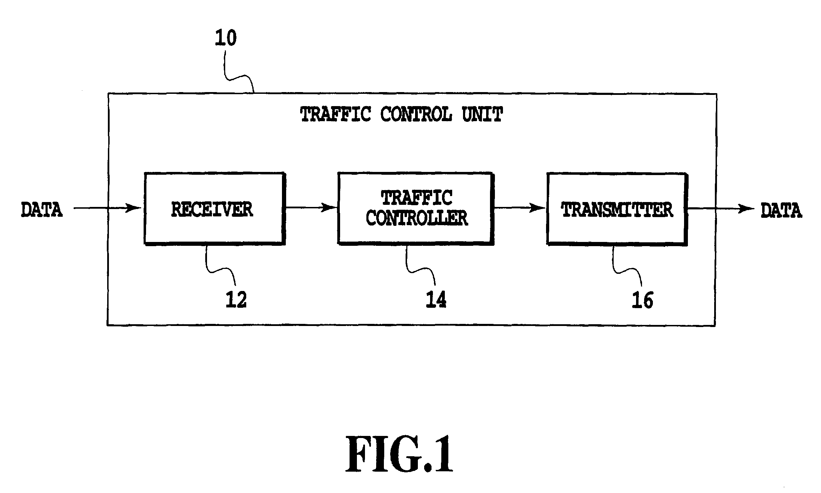

Fig. 1 is a block diagram showing a configuration of a traffic control unit of a first embodiment in accordance with the present invention. A traffic control unit 10 of the present embodiment comprises a receiver 12, a traffic controller 14 and a transmitter 16. The traffic controller 14 carries out the traffic control of the data received by the receiver 12. Although the data unconformable to the traffic condition (declared parameter) of the traffic control is discarded in the present embodiment, the data transmission can be regulated to meet the traffic condition by installing a buffer. The transmitter 16 transmits the data, which undergoes the traffic control. Although the traffic controller 14 is implemented in the form of hardware in the present embodiment, it can be implemented by means of software.

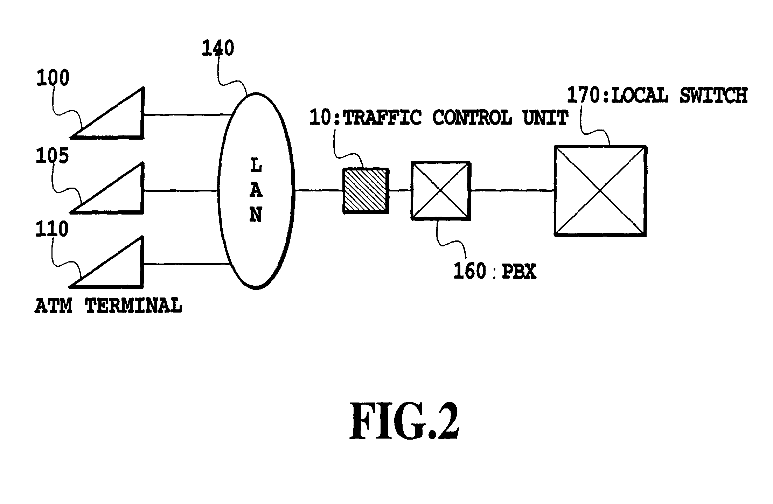

Fig. 2 is a block diagram showing an example in which the traffic control unit of the present embodiment is installed in the network including a LAN and PBX. Data transmitted from an ATM terminal 100, 105 or 110 is transmitted to a local switch 170 through a LAN 140 and PBX 160. The LAN 140 and PBX 160 are connected through a transmission path between LAN and PBX, which enables data transmission. Besides, the PBX 160 is connected to the local switch 170 through a transmission path between PBX and local switch, which enables the data transmission between them.

In Fig. 2, a traffic control unit 10 is installed on the transmission path between the LAN and PBX. This makes it possible to prevent the PBX 160 and transmission path between the PBX and local switch, which are the shared resources, from being wasted. Furthermore, as for the transmission path between the LAN and PBX, which is another shared resource, the waste thereof can be prevented from the traffic control unit 10 up to the PBX 160. In addition, since the traffic control is carried out in the transmission path between the LAN and PBX, which are shared resources, the possibility that a user loosens the traffic control is small.

Alternatively, the traffic control unit 10 can be installed in the LAN 140, PBX 160 or transmission path between the PBX and local switch, which are the shared resources.

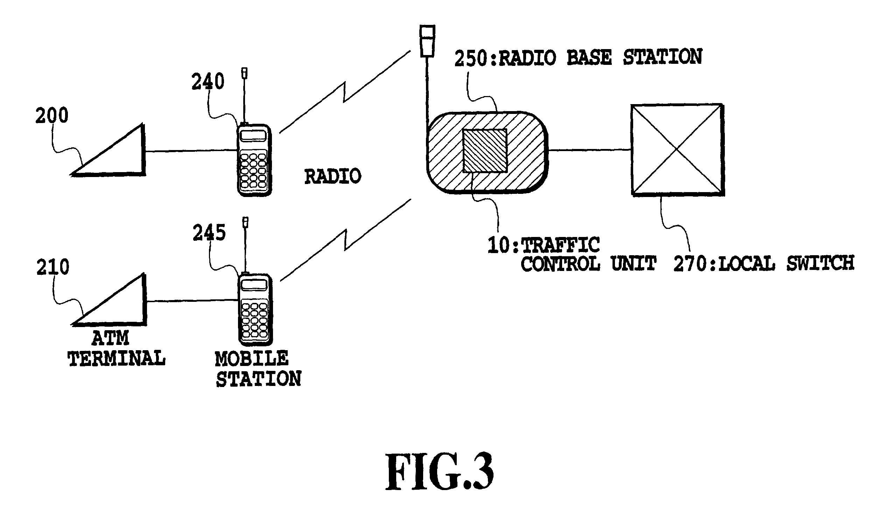

Fig. 3 is a block diagram showing an example, in which the traffic control unit of the present embodiment is applied to a mobile radio network comprising mobile stations and a radio base station. Data sent from an ATM terminal 200 or 210 is transmitted to a local switch 270 through a mobile station 240 or 245 and a radio base station 250. The mobile stations 240 and 245 and the radio base station 250 carry out data transmission by means of radio communications. In addition, the radio base station 250 and the local switch 270 are connected through a transmission path between the radio base station and local switch to perform data transmission.

In Fig. 3, the traffic control unit 10 is installed in the radio base station 250. This makes it possible to prevent the transmission path between the radio base station and local switch, which are shared resources, from being wasted. Besides, the radio base station 250, which is one of the shared resources, can also avoid a waste processing of the data discarded by the traffic control. Moreover, since the radio base station 250, which is one of the shared resources, carries out the traffic control, the possibility that the user loosens the traffic control is small.

Incidentally, the traffic control unit 10 can also be installed on the transmission path between the radio base station and local switch, which belong to the shared resources.

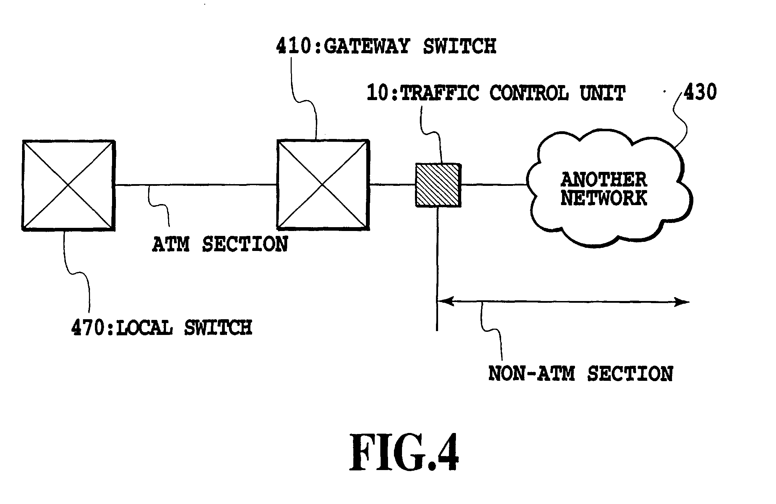

Fig. 4 is a block diagram showing a configuration in which the traffic control unit of the present embodiment is installed in a network comprising another network and a gateway switch. Another network 430 (a partial network seen from the entire network) in a non-ATM section 440 is a network to which an Internet services provider (ISP) provides connection, for example. In this case, when the ISP does not support the traffic control, it will be possible that burst mode traffic beyond the declared traffic volume can take place depending on the traffic condition at the user terminal. Accordingly, the effective usage of the resources in the network can be achieved by shaping the traffic within the declared value defined in advance by the traffic control unit 10 installed between the another network 430 and gateway switch 410.

The data transmitted from the another network 430 is transferred to the local switch 470 through the gateway switch 410. The another network 430 is connected with the gateway switch 410 through the transmission path between the another network and gateway switch, which enables the data transmission. In addition, the gateway switch 410 and local switch 470 are connected through the transmission path between the gateway switch and local switch, which enables the data transmission.

In Fig. 4, the traffic control unit 10 is installed on the transmission path between the another network and gateway switch. This can prevent the gateway switch 410 and transmission path between the gateway switch and local switch, which are the shared resources, from being wasted. Besides, on transmission path between the another network and gateway switch, which is one of the shared resources, the waste of the part from the traffic control unit 10 up to the gateway switch 410 can be prevented. Moreover, since the traffic control is carried out between the another network and the gateway switch, which belong to the shared resources, the possibility that the user loosens the traffic control is small.

Incidentally, the traffic control unit 10 can also be installed in the gateway switch 410 or on the transmission path between the another network and gateway switch, which are the shared resources.

Thus carrying out the traffic control positively in an appropriate position in the network as in the present embodiment can prevent the shared resources in the network from being wasted.

### [SECOND EMBODIMENT]

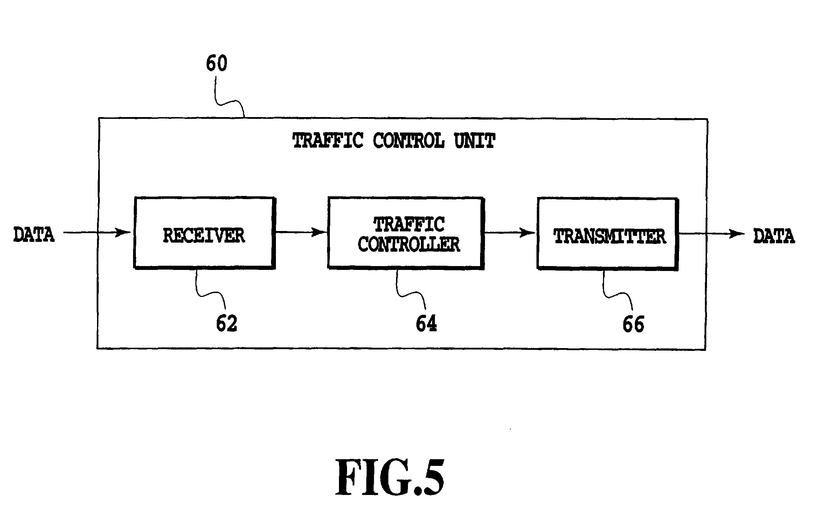

Fig. 5 is a block diagram showing a configuration of a traffic control unit of a second embodiment in accordance with the present invention. Like the traffic control unit 10 of the first embodiment, a traffic control unit 60 of the present embodiment comprises a receiver 62, a traffic controller 64 and a transmitter 66. Although the traffic controller 64 is implemented in the form of hardware in the present embodiment, it can be implemented by means of software. The traffic controller 64 carries out peak traffic control and sustainable traffic control as will be described below.

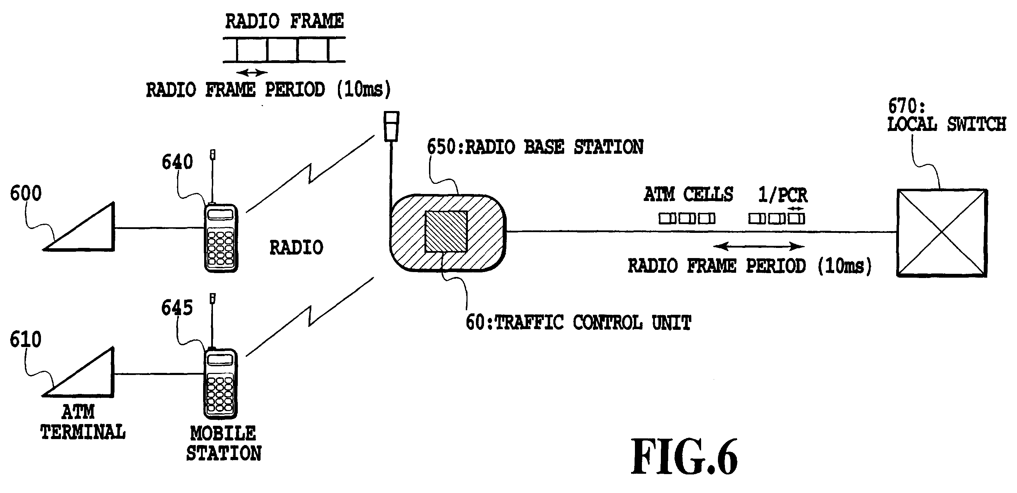

Fig. 6 is a block diagram showing a mobile radio network, in which the traffic control unit of the present embodiment is installed in the radio base station of the mobile radio network as in Fig. 3 to carry out the traffic control of ATM cells (data) consisting of radio frames. Installing the traffic control unit 60 in the radio base station 650 enables the traffic control to be achieved positively, and to prevent the shared resources in the network from being wasted as described in connection with the first embodiment.

Data transmitted from an ATM terminal 600 or 610 is transmitted to the radio base station 650 through a mobile station 640 or 645. The radio base station 650 generates ATM cells from radio frames, and carries out the traffic control of the generated ATM cells by the traffic control unit 60. The ATM cells subjected to the traffic control are transmitted to a local switch 670.

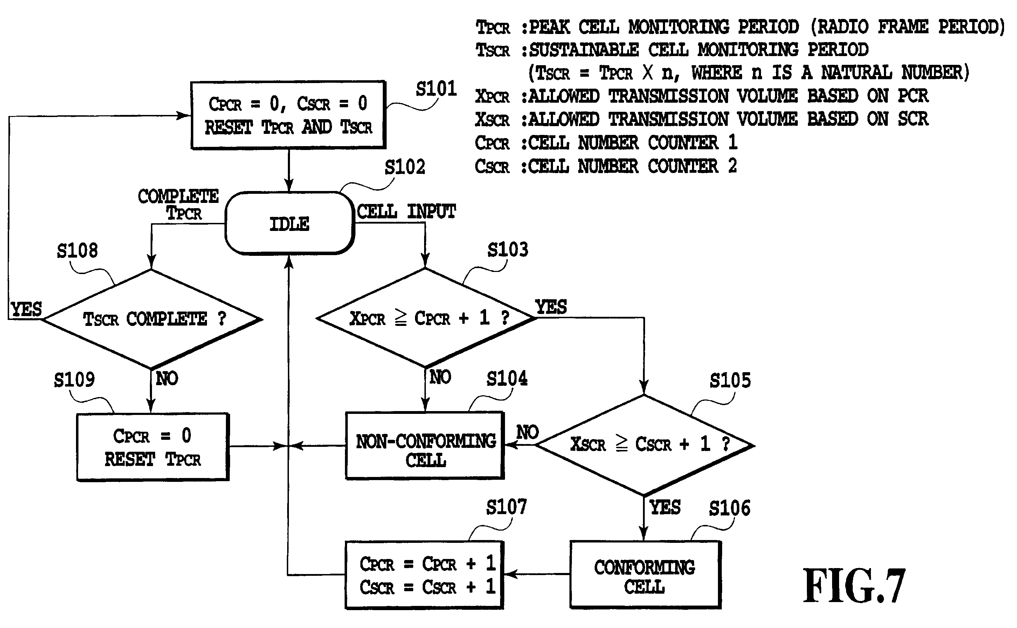

Fig. 7 is a flowchart illustrating a control processing of the traffic control unit of the present embodiment. In Fig. 7, T_{PCR} denotes a peak cell (traffic) monitoring period, which is equal to the radio frame period in the present embodiment. This makes it possible to avoid discarding much of the ATM cells that are generated in a burst mode. T_{SCR} designates a sustainable cell (traffic) monitoring period, which is equal to n times the radio frame period (= T_{PCR}) in the present embodiment, where n is a natural number. X_{PCR} denotes an allowed transmission volume based on PCR, that is, the number of cells transmittable in the peak cell monitoring period. X_{SCR} denotes an allowed transmission volume based on SCR, that is, the number of cells transmittable in the sustainable cell monitoring period. C_{PCR} and C_{SCR} are a counter of the number of cells, each.

As the traffic control processing, at step S101, the counters C_{PCR} and C_{SCR} are cleared to zero and the monitoring periods T_{PCR} and T_{SCR} are reset, first. Then, it enters the idle state at step S102. When a cell input takes place, a decision is made at step S103 as to whether the new input of the cell causes the cumulative cell transmission volume (the cell number counter) C_{PCR} in the current peak cell monitoring period to exceed the allowed transmission volume X_{PCR}. If exceeding, the new input cell is decided as a non-conforming cell at step S104. If not exceeding, a decision is made at step S105 as to whether the new input of the cell causes the cumulative cell transmission volume C_{SCR} in the current sustainable cell monitoring period to exceed the allowed transmission volume X_{SCR} or not. If exceeding, the new input cell is decided to be a non-conforming cell at step S104. If not exceeding, the new input cell is decided as a conforming cell at step S106, and the C_{PCR} and C_{SCR} are incremented by one at step S107.

After deciding the conformance/non-conformance of the new input cell, the processing returns to the idle state at step S102, at which a decision is made as to whether the peak cell monitoring period T_{PCR} is completed or not, and proceeds to step S108 when completed. The decision of the completion is made even if the cell input does not take place. At step S108, a decision is made as to whether the sustainable cell monitoring period T_{SCR} is completed, and if completed, the processing returns to step S101. If not, the processing proceeds to step S109, to clear the C_{PCR} to zero, and reset the T_{PCR}, thus returning to step S102.

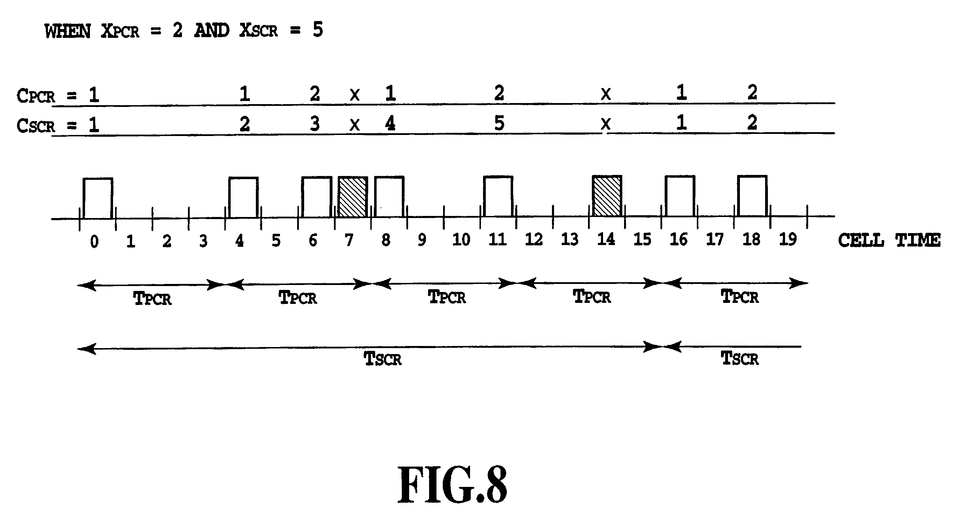

Fig. 8 is a diagram illustrating an example that applies the traffic control processing of Fig. 7 to the new cell transmitted. In Fig. 8, it is assumed that T_{PCR} = 4 [cell time], T_{SCR} = 16 [cell time] (n = 4), X_{PCR} = 2 [cells], and X_{SCR} = 5 [cells]. When applying the control processing to the cells transmitted, the C_{PCR} and C_{SCR} vary as shown in Fig. 8, and the cells at the seventh and 14th cell times are decided as a non-conform cell because of X_{PCR} < C_{PCR} + 1, and X_{SCR} < C_{SCR} + 1, respectivly.

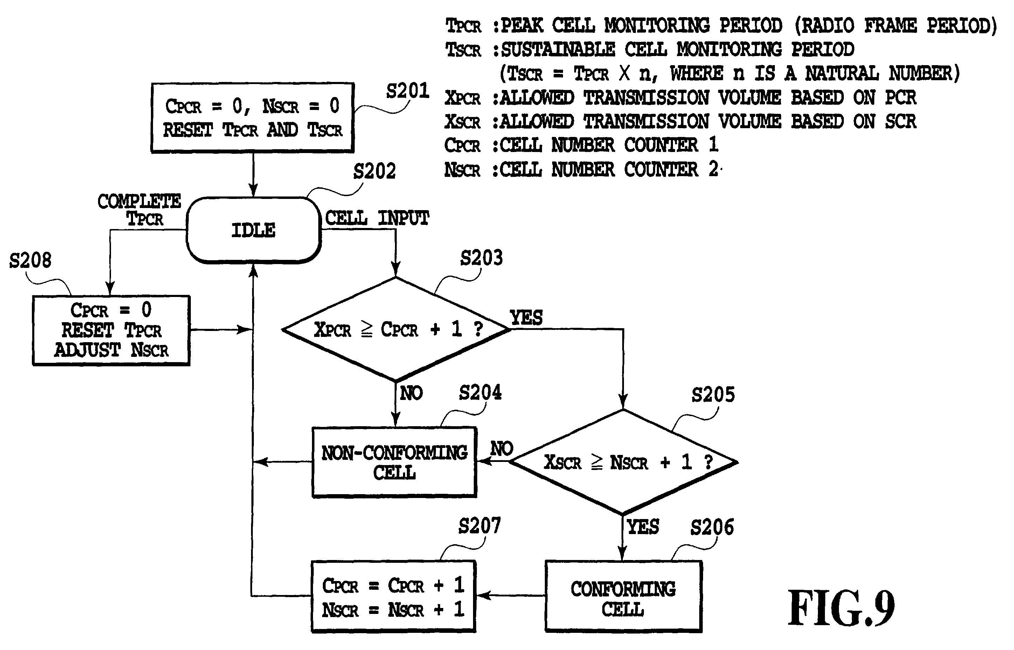

Fig. 9 is a flowchart illustrating another example of the control processing by the traffic control unit in the present embodiment. The control processing carries out the sustainable traffic control by sliding the sustainable traffic monitoring period at every peak traffic monitoring period. The symbols T_{PCR}, T_{SCR} and the like are the same as those of Fig. 7.

As the traffic control processing, at step S201, the counters C_{PCR} and N_{SCR} are cleared to zero and the monitoring periods T_{PCR} and T_{SCR} are reset, first. Then, the processing enters the idle state at step S202. When a cell input takes place, a decision is made at step S203 as to whether the new input of the cell causes the cumulative cell transmission volume C_{PCR} in the current peak cell monitoring period to exceed the allowed transmission volume X_{PCR}. If exceeding, the new input cell is decided as a non-conforming cell at step S204. If not exceeding, a decision is made at step S205 as to whether the addition of the new input cell causes the cumulative cell transmission volume N_{SCR} in the current sustainable cell monitoring period to exceed the allowed transmission volume X_{SCR} or not. If exceeding, the new input cell is decided to be a non-conforming cell at step S204. If not exceeding, the new input cell is decided as a conforming cell at step S206, and the C_{PCR} and N_{SCR} are incremented by one at step S207.

After deciding the conformance/non-conformance of the new input cell, the processing returns to the idle state at step S202, at which a decision is made as to whether the peak cell monitoring period T_{PCR} is completed or not, and proceeds to step S208 when completed. The decision of the completion is made even if the cell input does not take place. At step S208, the C_{PCR} is placed to zero, the T_{PCR} is reset, and the N_{SCR} is adjusted. The adjustment of the N_{SCR} is carried out by sliding the sustainable traffic monitoring period, and by subtracting from the N_{SCR} the number of cells excluded from the period by the sliding. Subsequently, the processing returns to step S202.

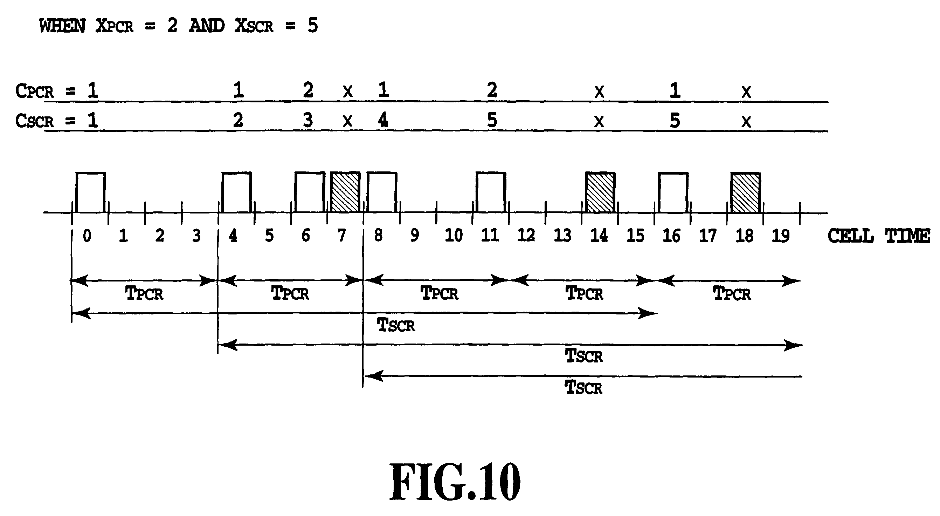

Fig. 10 is a diagram illustrating an example that applies the traffic control processing of Fig. 9 to the new cell transmitted. In Fig. 10, it is assumed that T_{PCR} = 4 [cell times], T_{SCR} = 16 [cell times] (n = 4), X_{PCR} = 2 [cells], and X_{SCR} = 5 [cells]. When applying the control processing to the cells transmitted, the C_{PCR} and N_{SCR} vary as shown in Fig. 10, and the cells at the seventh, 14th and 18th cell times are decided as a non-conform cell because of X_{PCR} < C_{PCR} + 1, X_{SCR} < N_{SCR} + 1 and X_{SCR} < N_{SCR} +1, respectively.

Although the control based on both the PCR and SCR is carried out in the traffic control of the present embodiment, the control based on one of them is possible. Besides, a rate other than the PCR and SCR can be used as the cell (traffic) rate.

Implementing appropriate control is possible by selecting, for the data generated in a burst mode at the period proper to the data, the traffic monitoring period with considering the proper period as in the present embodiment.

Although the foregoing description of the present invention is made by way of example of the ATM transmission, the present invention is also applicable to other transmission systems.

## Claims

1. A traffic control unit for carrying out traffic control of data in a first shared resource of a network including besides the first shared resource, a second shared resource and a local switch, which are shared by a plurality of users, said traffic control unit characterized by comprising:
receiving means for receiving the data;
traffic control means for carrying out traffic control of data to be transmitted to said local switch through said second shared resource from among the data received by said receiving means; and
transmission means for transmitting the data passing through the traffic control by said traffic control means.

2. The traffic control unit as claimed in claim 1, characterized in that said network comprises:
a radio base station; and
a transmission path between the radio base station and local switch for transmitting data between said radio base station and said local switch, and characterized in that said first shared resource consists of said radio base station, and said second shared resource includes said transmission path between the radio base station and local switch.

3. The traffic control unit as claimed in claim 1 or 2, characterized in that said data takes place in a burst mode at a period proper to the data, and characterized in that said traffic control unit carries out, for the data received by said receiving means, traffic control such that a cumulative transmission volume in a traffic monitoring period defined by taking account of the proper period does not exceed a volume based on a traffic rate.

4. A traffic control unit for carrying out traffic control of data taking place in a burst mode at a period proper to the data, said traffic control unit characterized by comprising:
receiving means for receiving data;
traffic control means for carrying out traffic control for the data received by said receiving means such that a cumulative transmission volume in a traffic monitoring period defined by taking account of said proper period does not exceed an allowed transmission volume based on a traffic rate; and
transmission means for transmitting data controlled by said traffic control means.

5. The traffic control unit as claimed in claim 4, characterized in that said traffic control means carries out, for the data received by said receiving means, peak traffic control such that a cumulative transmission volume in a peak traffic monitoring period defined by taking account of the proper period does not exceed an allowed transmission volume based on a peak traffic rate, and sustainable traffic control such that a cumulative transmission volume in a sustainable traffic monitoring period defined by taking account of the proper period does not exceed an allowed transmission volume based on a sustainable traffic rate.

6. The traffic control unit as claimed in claim 5, characterized in that said sustainable traffic control is carried out by sliding the sustainable traffic monitoring period at every peak traffic monitoring period.

7. The traffic control unit as claimed in claim 5 or 6, characterized in that said peak traffic control period is equal to said proper period, and said sustainable traffic control period is equal to n times said proper period, where n is a natural number.

8. The traffic control unit as claimed in any one of claims 4-7, characterized in that said data consists of ATM cells generated from a radio frame, and said proper period equals a radio frame period.

9. A traffic control method for carrying out traffic control of data in a first shared resource of a network including besides the first shared resource, a second shared resource and a local switch, which are shared by a plurality of users, said traffic control method characterized by comprising the steps of:
receiving data;
carrying out traffic control of data to be transmitted to said local switch through said second shared resource from among the data received; and
transmitting the data passing through the traffic control.

10. A traffic control method for carrying out traffic control of data taking place in a burst mode at a period proper to the data, said traffic control method characterized by comprising the steps of:
receiving data;
carrying out traffic control of the data received such that a cumulative transmission volume in a traffic monitoring period defined by taking account of the proper period does not exceed an allowed transmission volume based on a traffic rate; and
transmitting data passing through said traffic control.
